# EUROPEAN PATENT SPECIFICATION

(11) **EP 2 159 448 B1**
(45) Date of publication and mention of the grant of the patent: **16.01.2013**
(21) Application number: 08105123.7
(22) Date of filing: 25.08.2008
(51) Int. Cl.: F16H 7/02, F16H 7/08, F16G 1/28, A01D 42/00

(54) **Pulley drive system**
Antriebssystem für eine Riemenscheibe
Système de commande de poulie

(43) Date of publication of application: 03.03.2010
(73) Proprietor: Robert Bosch GmbH, 70442 Stuttgart (DE)
(72) Inventor: Quigley, Andrew, Matlock, DE44LS (GB); Evans, Timothy, Suffolk, IP29DA (GB); Smith, Andrew, High Peak, SK237AN (GB)

(56) References cited:
- WO-A-01/63145
- DE-U1- 20 319 219
- JP-A- 2006 072 206
- JP-A- 2008 099 610

## Description

### FIELD OF THE INVENTION

The invention relates to pulley drive system, and more particularly to a pulley drive system for an electrically powered lawn care device, such as an electrically driven lawnmower.

### BACKGROUND OF THE INVENTION

Pulley drive systems are well known. In the field of lawnmowers, it is known to provide a belt, trained around a driving pinion and a driven pulley. Pulley drive systems are known which have a fixed distance between a driving pinion and a driven pulley. It is not possible to use such systems if a high reduction ratio is required and there is only a short centre distance between the pinion and the pulley since only a few teeth of the driving pinion will engage with the belt. Systems are also known in which the distance between the centres of driving and driven pulleys is adjustable. Such systems have additional assembly costs and require extra packaging space to allow the components to move for tensioning the belt. In situations where a high power is required or there is a large degree of inertia in the system, harsh impact noises on start-up can occur and damage to the belt and pinion can even result. This is especially applicable for products powered by universal electric motors which deliver maximum drive torque on initial start up. Pulley drive systems which use a V belt are also known, as disclosed in FR2902282.

WO 01/63145 discloses a pulley drive system including an endless toothed v-belt. The v-belt is trained around a toothed pulley and a v-belt pulley. A momentary slip occurs between the opposing inclined sides of the v-belt and the groove of the v-belt pulley during a load change.

The generic JP 2008099610 discloses a mower having an endless belt trained around a driving pinion and a driven pulley. A tensioning arrangement acts on the belt.

The present invention aims to alleviate or eliminate the shortcomings of the prior art systems and especially those that require there to be an accurate fixed centre distance between the pinion and the pulley.

### SUMMARY OF THE INVENTION

With the foregoing in mind, there is provided in accordance with the invention a pulley drive system, such as for an electric motor drive, comprising an endless belt trained around a driving pinion and a driven pulley, and a tensioning arrangement acting on a stretch of the belt between the driving pinion and the driven pulley to increase tension in the belt, wherein the driven pulley is arranged without full meshing engagement with the section of the belt in contact therewith, and characterised in that said endless belt is a toothed belt and the tensioning arrangement is set to tension the toothed belt so that slip will occur between the toothed belt and the driven pulley upon start-up of the drive system before the drive pinion and the driven pulley reach synchronous rotational speeds, and in that the driven pulley has partial teeth that mesh with the toothed belt, and in that each partial tooth has a top profile formed as a smooth curve.

As described below, the driven pulley may be a smooth pulley without any meshing engagement with the belt, or may have partial teeth for a partial meshing engagement with the belt.

Advantageously, a non disengagable belt drive is provided in which the belt is under tension.

The tensioning arrangement applies tension to the toothed belt at a level so that slip can occur between the belt and the driven pulley. The torque at which slip occurs will depend on the interaction between the belt and the pulley and therefore factors which influence this. The higher the tension in the system, the greater the torque at which the system will slip.

The tension arrangement tensions the toothed belt so that slip occurs between the belt and the driven pulley at a drive torque level within a predetermined range. Slippage can be advantageous to the system and it is intended that some slip will occur on start up of the motor to reduce loud noises and prevent damage to the belt which would otherwise be caused by undissipated forces being exerted on the belt. Such slip will be a momentary, controlled slip and will not be continuous or prolongued. This slip will be indiscernible to a user operating a machine equipped with the drive system.

The torque at which the belt will slip can be below a motor stall torque. The motor stall torque is the torque which the motor would apply when in a stalled condition but energised. Slip is not intended to occur during normal operating conditions but will occur if the rotor locks and the drive torque suddenly increases. If the rotor is locked and the torque in the pulley system exceeds the slip value, the belt will slip on the pulley and the motor will not experience a torque high enough to cause stall. A device could be provided to detect this situation and cut power to the motor in this case. The belt will continue to slip until the motor is de-energised by an overload cut-out means.

The drive torque at which the belt slips can alternatively be set to a value greater than the motor stall torque. During start-up of the motor, due to the inertia effects the torque experienced in the pulley system can be greater than the motor stall torque value so slip can still occur on start-up of the motor. If the rotor locks and the drive torque suddenly increases, the motor will stall before the belt slips. If the motor is provided with an overload cut-out means and the system slips at a drive torque just greater than the motor stall torque, the belt could slip just after the motor stalls and whilst the torque experienced by the system is at a maximum.

Slip in the event of a stall could be continuous and discernable to the operator. The slip should last for no longer than a few seconds at a time, such as in the order of ten seconds, as this could cause damage to system components.

The drive torque at which the belt will slip is determined using the relevant parameters of the system, including component sizes and positions. Variations which may occur with regard to these factors are taken into account and the drive torque is always calculated based on that value within the tolerance range that produces the lower slip torque. Any variation in a system component, such as the belt length, will then result in a slight increase in the drive torque at which the belt will slip, as opposed to a decrease in this value. This ensures that the system slips within a predetermined range with a lower end value which is never too small.

The toothed belt is ideally in full mesh with the teeth of the driving pinion. Providing a toothed belt means that a lower tension can be applied to the belt when the belt is installed compared with a non-toothed belt. The driving pinion meshes with the belt and ensures a positive driving engagement between the driving pinion and the belt. Slip will occur between the belt and the driven pulley and not between the belt and the driving pinion.

The driven pulley can be a smooth pulley. A smooth pulley is one which has no teeth for meshing with the toothed belt. A smooth pulley will facilitate momentary controlled slip of the belt on the pulley if the torque in the system becomes too great. As said, the higher the tension in the system, the greater the value at which slip will occur. The torque slip value could be chosen such that slippage occurs on start-up of the motor and in a dynamic stall of the motor.

Alternatively, the driven pulley may be provided with a number of partial teeth, that is teeth that mesh only partially with the toothed belt and hence mesh with the belt less positively than with the drive pinion. A partial tooth permits slip of the belt when the force between the belt and the pulley is greater than a certain value. Under normal operating conditions, a partial tooth will engage with the belt and a force will be exerted on the partial tooth by the belt when the belt is moving, which in turn drives the pulley. Under operating conditions in which a high force is exerted on the partial tooth, the belt will slip on the tooth and move in relation to the pulley. In comparison with the smooth pulley, the belt will slip relative to a pulley with partial teeth at a higher torque value for a given tension in the system. Thus, if it is desired that tension in the system be relatively low, the torque value at which slippage occurs can be maintained by using a pulley with partial teeth as opposed to a smooth pulley.

The number of partial teeth that are in mesh with the toothed belt can be less than a number of teeth of the belt contacting the pulley. More especially the partial teeth can be spaced apart around the drive pulley at a distance several times greater than the distance between notches of the toothed belt. Selecting the number of partial teeth on the driven pulley provides a way of determining the actual torque value at which slippage will occur between the belt and the driven pulley. Increasing the number of teeth will increase the torque slip value. The partial teeth can be equally spaced on the pulley. One partial tooth could be provided for five belt teeth for example and other combinations could be considered, depending on the maximum number of teeth which could be accommodated on the driven pulley and the torque slip value required for a system.

A partial tooth has a top profile formed as a smooth curve. It may, in addition to this, have a sloping flank, at least on a driving side of the partial tooth. These features enable the belt to slip without damage in high torque situations. The belt will slide on the top profile and may also slide up the sloping flank when a high torque is exerted on the system. Adjusting the tooth profile will affect the slip torque value. Having a steep flank for example will increase the slip torque whereas a shallower flank will see the belt slip at a lower torque value.

A partial tooth may have a height which is 30 to 90 percent of the height of teeth on the belt. The height of the partial tooth is preferably 60 to 80 percent the height of teeth of the belt. This height definition enables the partial tooth to fulfil its function. If the partial tooth is too tall, the belt will not slip at a low enough torque value. If the partial tooth is too small, the belt will not be effectively engaged by the tooth, and the pulley will be more akin to a smooth pulley.

The tensioning arrangement may comprise a tension device mounted to a frame fixed relative to a motor which drives the drive system. Such a frame could form part of a structure of a machine such as a lawnmower. The frame could conveniently be an integral part of the motor. The device is mounted to the motor frame by a releasable connection, for example a bayonet-type rotatable coupling, herein also referred to as a bayonet coupling whereby assembly of the drive system is facilitated. The tension device comprises an idler arm which is rotatably mounted to the motor frame at one end, and which has a free end provided with a member, conveniently formed as a bearing, for engaging the toothed belt. The arm is rotatable about the point at which the device is mounted to the motor frame. The arm is acted upon by a spring, preferably a torsion spring, for applying tension to the belt. The motor frame provides a convenient mounting place for locating the tension device near to the driving pinion, however it is also conceivable to position the tension device at other locations around the belt.

In a preferred construction the tension device is a unit which can be assembled onto the motor frame in one piece. The bearing which contacts the belt is snap-fitted to the free end of the arm of the tension device and the spring is added to this assembly at the mounting point end of the device. This unit is then assembled to the motor frame by the releasable connection. During such assembly the free end of the tensioner can be rotated about its mounting point to stress the spring. As a spring will always want to return to its unloaded state, the spring exerts a force counter to the direction in which the free end of the tensioner was rotated, and the tensioning arrangement is located in a position such that this causes the bearing at the free end to exert a force on the drive belt. A tensioning force is thereby applied between the drive pinion and the driven pulley.

The tensioning arrangement may be such that the tension device can be mounted to the motor frame in a storage position as well as in an operating position. The storage position refers to a position in which installation of the system is incomplete and tension is not to be applied to the belt. The tensioning arrangement can be locked temporarily in the storage position, such as by the bayonet coupling. In the operating position, the torsion spring acts on the idler arm and tension can be applied to the belt.

The drive of the system may have a high reduction ratio.

The pulley drive system described may be employed with advantage in an electrically powered lawn care device, especially an electrically driven lawn mower.

### BRIEF DESCRIPTION OF THE DRAWINGS

A more complete understanding of the invention, its objects and features will be gained from the following detailed description of some embodiments, reference being made to the accompanying drawings in which:-
Figure 1 is a side elevation showing a pulley drive system according to the invention comprising a smooth driven pulley;
Figure 2 is a side elevation showing a pulley drive system according to the invention comprising a driven pulley with partial teeth;
Figure 3 is an enlarged scale view of a part of the drive system shown Figure 2, within the circle A.
Figure 4 is a perspective view of a pulley drive system of Figure 2;
Figure 5 is a perspective view of a pulley drive system of Figure 2 including an exploded view of the tensioning arrangement;
Figure 6 is a two dimensional view of the pinion and tensioning arrangement in an operating position;
Figure 7 is a cross sectional view along the line VII-VII of Figure 6;
Figure 8 is a two dimensional view of the pinion and tensioning arrangement in a storage position; and
Figure 9 is a cross sectional view along the line IX - IX of Figure 8.

### DETAILED DESCRIPTION OF THE INVENTION

Two embodiments of the pulley drive system according to the invention are shown in the drawings, and the same reference numerals are used in all the Figures to designate corresponding components and features. The pulley drive system is particularly, though not exclusively, intended for use in a lawn care device.

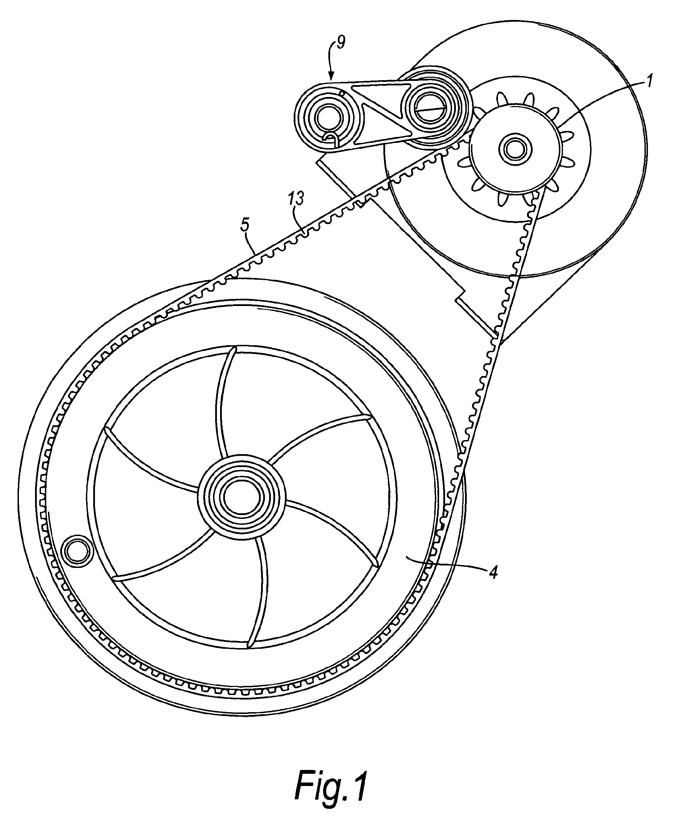

Figure 1 shows a pulley drive system with an endless belt 5 trained around a driving pinion 1 and a driven pulley 4. A tensioning arrangement 9 is arranged to act on a stretch of the belt between the driving pinion 1 and the driven pulley 4 to increase the tension in the belt 5. The tensioning arrangement 9 is located on a motor frame 2 in the region of the driving pinion. The belt 5 is a toothed belt with teeth 13. The pinion gear 1 has teeth (not shown) with which the teeth 13 on the belt 5 are in full meshing engagement. The driven pulley 4 is a smooth pulley and has no teeth.

The relative size difference between the pinion 1 and the pulley 4 illustrates an embodiment with a high reduction ratio of approximately 4.5 to 1. This system is equally applicable to systems with a higher reduction ration still, for example a ration of 6 to 1. There are no constraints envisioned which would prevent this system being applied to systems with yet higher reduction ratios.

The driving pinion 1 is powered by an electric motor 3. As the pinion 1 rotates, the belt is driven around due to the positive engagement between the teeth 13 of the belt 5 and those of the driving pinion 1. The pulley 4 is in turn rotated by the moving belt, unless the torque between the belt 5 and the pulley 4 is so great that the belt slips on the smooth pulley 4. The torque value at which slip will occur depends on the tension in the system. The greater the tension the higher the torque slip value. The tensioning arrangement 9 sets the tension so that the system slips at a desirable predetermined level of torque. The rotation direction is such that the tensioning arrangement is on the slack side of the belt.

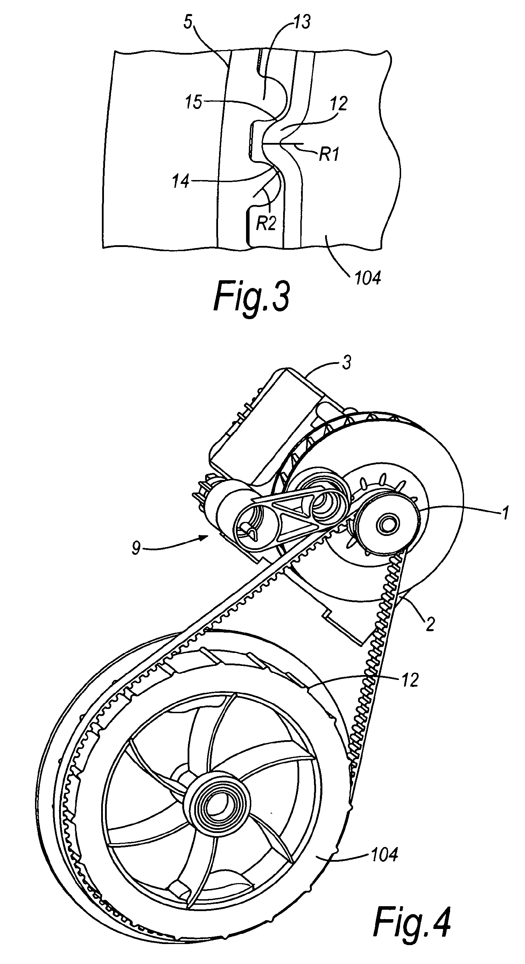

The tensioning arrangement 9 will be described in detail later with reference to Figures 4 to 9.

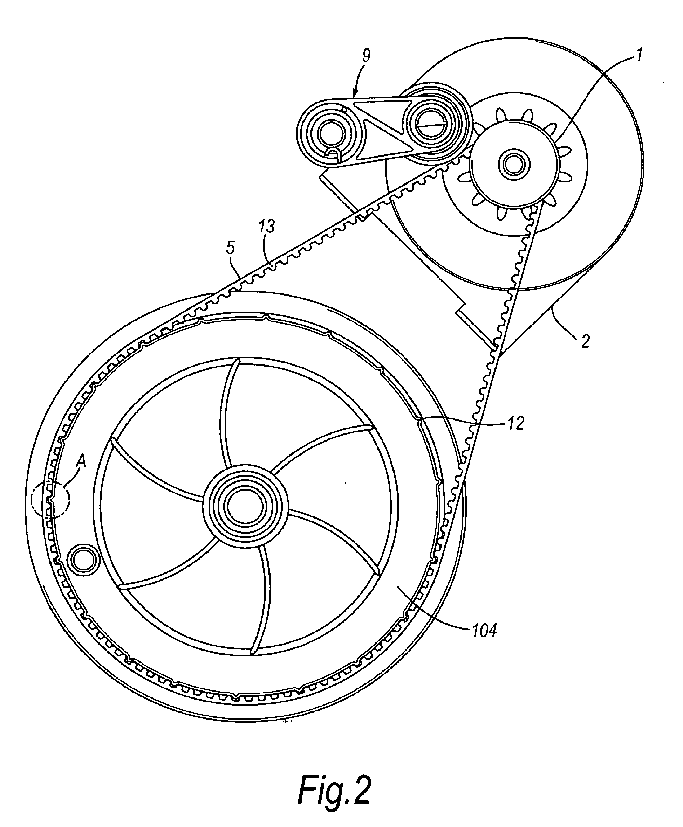

Figures 2, 4 and 5 show a pulley drive system which is the same as that of Figure 1 except that the driven pulley has partial teeth 12, for cooperation with the toothed belt. The partial teeth 12 are formed around the circumference of the pulley 104 and are equally spaced about the pulley 104 at a distance so that only one in five belt teeth 13 engage with a partial tooth 12 over the section of the belt in contact with the pulley 104. The full number of teeth for pulley 104 is therefore a multiple of 5 in this embodiment.

As shown in Fig. 3 the top part of the partial tooth furthest from the pulley 104 has a curved profile. The tooth profile is smooth and has a convex radius of curvature R1 in the region at the top of the tooth and a concave radius of curvature R2 in the region of the root of the tooth on each flank. The curvatures merge smoothly so that there is no sudden change in the tooth profile. The sides of the tooth 14, 15 are sloped. The partial tooth could alternatively have a sloped flank only on the driving side of each partial tooth (not shown). The sloped flank could have a steeper or a shallower profile to that shown in Figure 3.

The height of the partial tooth H1 is less than the height of the belt teeth H2, and hence the depth of the notches between the teeth of the belt. Each partial tooth 12 has a height which is in the range of 30 to 90 percent, preferably 60 to 80 percent, the height of the teeth of the belt 13.

The shape of the partial tooth 12 will effect the torque slip value. A partial tooth 12 with a smaller height and with a less steep flank or shallower curved top profile will result in a system which slips at a lower torque value compared to a system with higher, steeper partial teeth. The actual torque slip value can also be adjusted by varying the number of partial teeth 12 on the pulley 104. Decreasing the number of partial teeth 12 will reduce the torque slip value and increasing the number of partial teeth 12 will increase the torque slip value.

The shape, number and distribution of partial teeth 12 will effect the interaction between the belt 5 and the pulley 104 and therefore the torque slip value. For a given system, the tensioning arrangement can apply a tension to the belt such that the belt slips at an optimum torque value. This allows performance of the system under most operating conditions and permits slip to occur when the tension exceeds a value which would otherwise cause potential damage to system components, such as the belt teeth 13. The system emits less noise when slipping than a system not designed to slip when a large torque is experienced by the system. In a system not designed to slip, noise may occur from the belt jumping teeth on the pulley. The system components could alternatively be chosen and configured so that the tension required to be applied to the system is not so great as to reduce the function of other aspects of the system.

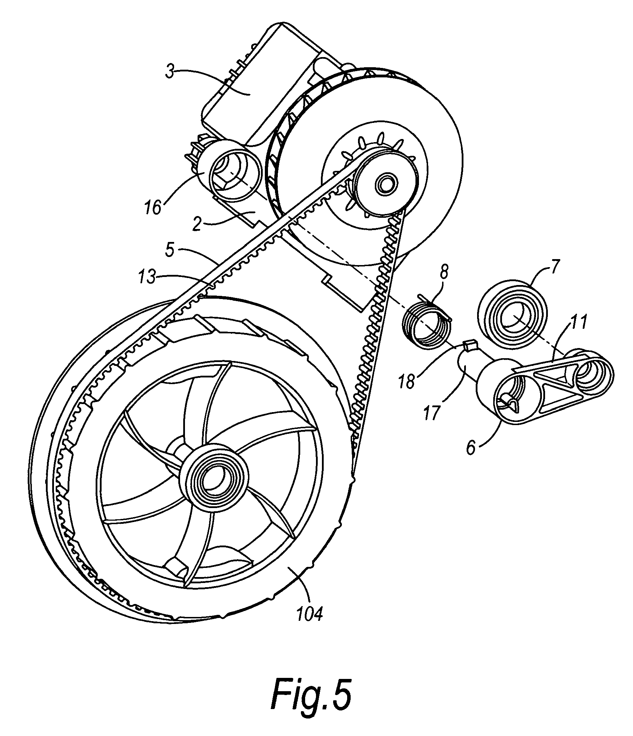

Figure 5 shows the tensioning arrangement in an exploded view. The tensioning arrangement comprises a tension device 6 which is a unit that can be mounted to the motor frame 2 by a releasable connection. The motor frame 2 is provided with one part of a bayonet coupling 16 also referred to here in as a socket and the tension device has the complementary part of the bayonet coupling with a mounting part 17 and a projection 18 extending from the mounting part 17 for locking engagement with first part of the bayonet fitting. The tension device 6 comprises an idler arm 11 connected at one end to the bayonet mounting part and at the other free end carrying a bearing 7 which is snap-fitted onto the free end of the idler arm. A torsion spring 8 is arranged on the mounting part 17 of the tension device 6 and acts between stops arranged on the idler arm and the motor frame to bias the idler arm to rotate in a clockwise direction as viewed in the drawings.

When the idler arm 11 is mounted to the motor frame by the bayonet coupling, the free end of the idler arm 11 is rotated anticlockwise about the mounting point and this tensions the torsion spring 8. The spring 8 therefore exerts a force pushing the arm 11 in a clockwise direction and this force is exerted on the belt 5 through the bearing 7, thereby removing any slack in the belt 5 and applying a tensioning force to a rear face of the belt. The location of the idler is such that the tensioning load is applied close to the point where the belt leaves the pinion in use so as to maintain or increase the belt wrap round on the pinion.

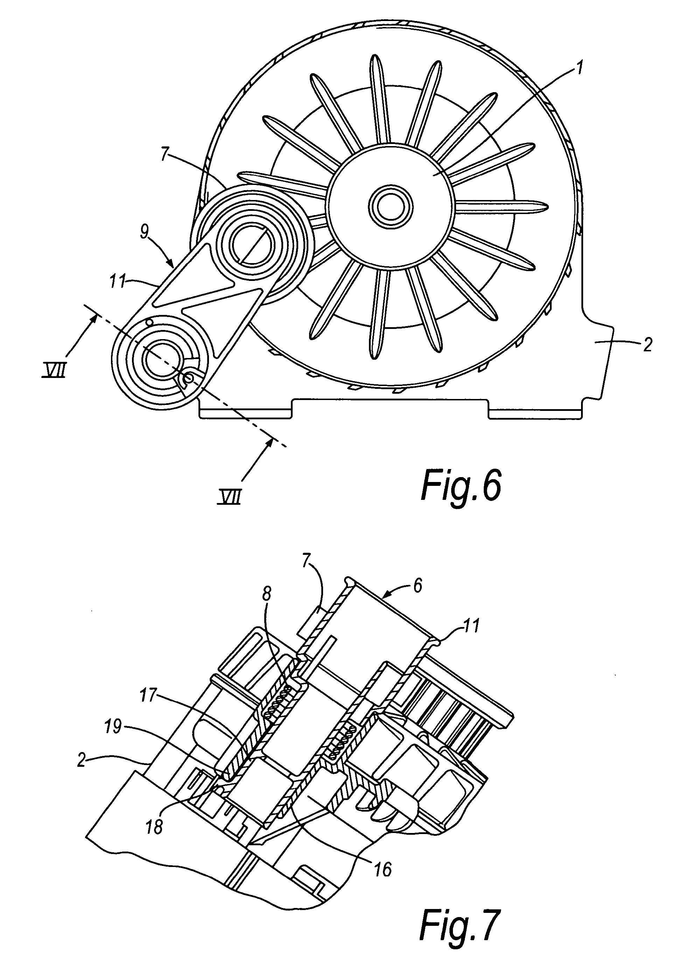

Figure 6 shows the position of the tensioning arrangement 9 in relation to the driving pinion 1, the belt 5 having been omitted for clarity purposes. This is the operating position.

Figure 7 shows a cross sectional view along the line VII - VII shown in Figure 6 and shows the projection 18 engaged behind an inwardly directed shoulder 19 of the bayonet socket on the motor frame 2. When mounting the tensioning device the projection 18 on the mounting part 17 is aligned with a groove in the bayonet socket which allows the mounting part 17 to be inserted into the socket in motor frame 2. Once fully inserted, the tension device 6 is rotated in an anticlockwise direction so the tension device 6 is retained axially in relation to the motor frame by the projection 18 engaging under the shoulder 19. The rotation of the tension device 6 also tensions the torsion spring 8. Rotational movement permitted in use by the belt of the tension device is limited in one direction by the torsion spring 8 and in the other direction by the belt 5. The degree of rotational movement permitted in use by the belt is such that the projection 18 will not rotate to a position in which the bayonet coupling can disengage. Under most operating conditions, the projection 18 will remain under the shoulder 19 and the tension device 6 will remain secured to the motor frame 2.

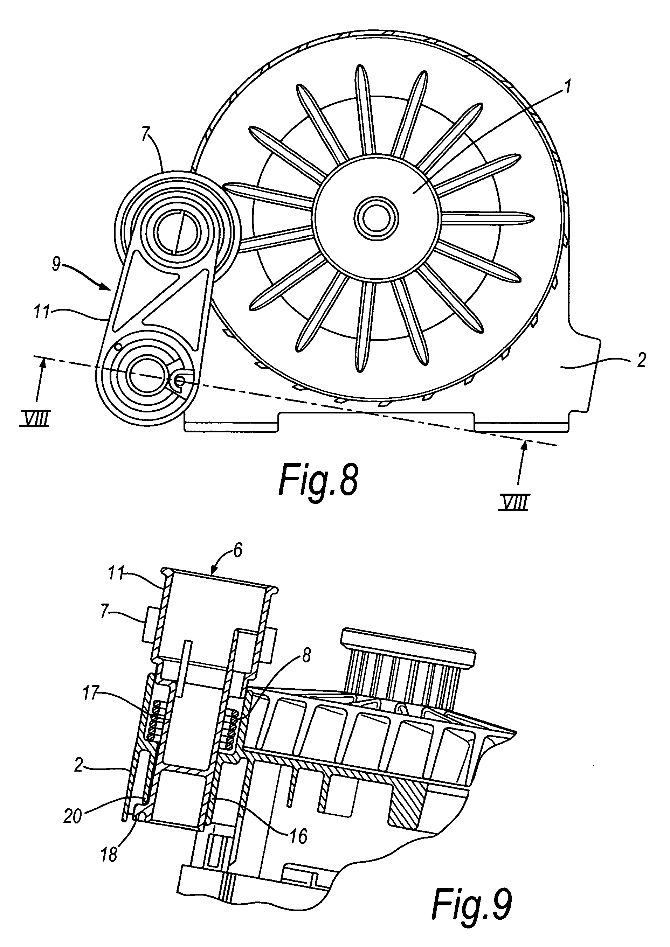

Figure 8 shows the tension device 6 mounted to the motor frame 2 in a storage position. As shown in Figure 9 the projection 18 is located underneath a part 20 of the bayonet socket on the motor frame 2.

The tension device 6 can be rotated in an anticlockwise direction from the operating position into the storage position. The bayonet coupling 16 on the motor frame comprises a locking slot, as is conventional in such couplings, which extends a small distance in a direction opposite that in which the tension device 6 is inserted into the socket of the motor frame. Part 20 forms the top of the locking slot. In the storage position, the projection 18 is aligned with the locking slot and the assembler can pull the tension device into the storage position so that the projection abuts the upper end of the locking slot and the idler arm is locked against rotation. In comparing Figures 7 and 9, the tension device 6 can be seen to be inserted in the motor frame 2 to a greater depth in the operative position of Figure 7 than in the storage position of Figure 9.

In rotating the tension device 6 from the normal operating position to the storage position, torsion spring 8 is further compressed, and it is retained in this stressed condition when the tension device is locked in the storage condition. When the bayonet lock is subsequently released by pushing the tension device downwardly into the mounting socket the spring is released so that the bearing 7 at the end of the idler arm is pressed against the belt.

## Claims

1. A pulley drive system, such as for an electric motor drive, comprising an endless belt (5) trained around a driving pinion (1) and a driven pulley (4, 104), and a tensioning arrangement (9) acting on a stretch of the belt (5) between the driving pinion (1) and the driven pulley (4, 104) to increase tension in the belt (5), wherein the driven pulley (4, 104) is arranged without full meshing engagement with the section of the belt in contact therewith, and **characterised in that** said endless belt is a toothed belt and the tensioning arrangement (9) is set to tension the toothed belt (5) so that slip will occur between the toothed belt (5) and the driven pulley (4, 104) upon start-up of the drive system before the drive pinion (1) and the driven pulley (4, 104) reach synchronous rotational speeds, and **in that** the driven pulley (4) has partial teeth (12) that mesh with the toothed belt, and **in that** each partial tooth (12) has a top profile formed as a smooth curve.

2. A pulley drive system according to claim 1, wherein the partial teeth (12) are spaced apart around the driven pulley at a distance several times greater than the distance between adjacent notches of the toothed belt.

3. A pulley drive system according to claim 1 or 2, wherein each partial tooth (12) has a sloping flank, at least on a driving side of the partial tooth.

4. A pulley drive system according to any one of claims 1 to 3, wherein each partial tooth (12) has a height which is 30 to 90 percent, preferably 60 to 80 percent, of the depth of notches between the teeth of the belt (12).

5. A pulley drive system according to any one of the preceding claims, wherein a motor is provided for driving the pulley drive system, and the tensioning arrangement tensions the toothed belt so that slip occurs between the toothed belt (5) and the driven pulley (4, 104) at a drive torque level which is below the motor stall torque of the motor.

6. A pulley drive system according to any one of the preceding claims, wherein the tensioning arrangement (9) comprises a tension device (6) mounted to a frame (2) fixed relative to a motor (3) which drives the drive system.

7. A pulley drive system according to claim 6, wherein the tension device (6) is mounted to the frame (2) by a releasable connection.

8. A pulley drive system according to claim 6 or 7, wherein the tension device (6) comprises an arm (11) rotatably mounted to the frame at one end and having a free end provided with a member, such as a bearing (7), for engaging the toothed belt (5).

9. A pulley drive system according to claim 8, wherein the arm (11) is acted upon by a spring (8), preferably a torsion spring, for applying tension to the belt (5).

10. An electrically powered lawn care device comprising a pulley drive system according to any one of the preceding claims.

## Patentansprüche

1. Scheibenantriebssystem wie für einen Elektromotorantrieb mit einem um ein Antriebsritzel (1) und eine angetriebene Scheibe (4, 104) herum geführten Endlosriemen (5) und einer Spannanordnung (9), die auf eine Strecke des Riemens (5) zwischen dem Antriebsritzel (1) und der angetriebenen Scheibe (4, 104) wirkt, um die Spannung im Riemen (5) zu erhöhen, wobei die angetriebene Scheibe (4, 104) ohne vollständigen kämmenden Eingriff in dem damit in Kontakt stehenden Riemenabschnitt angeordnet ist, **dadurch gekennzeichnet, dass** der Endlosriemen ein Zahnriemen ist und die Spannanordnung (9) so eingestellt ist, dass sie den Zahnriemen (5) spannt, so dass zwischen dem Zahnriemen (5) und der angetriebenen Scheibe (4, 104), beim Starten des Antriebssystems und bevor das Antriebsritzel (1) und die angetriebene Scheibe (4, 104) eine synchrone Drehzahl erreichen, Schlupf erfolgt und dass die angetriebene Scheibe (4) Teilzähne (12) hat, die mit dem Zahnriemen kämmen, und dass jeder Teilzahn (12) ein oberes Profil hat, das als glatte Kurve ausgebildet ist.

2. Scheibenantriebssystem nach Anspruch 1, wobei die Teilzähne (12) um die angetriebene Scheibe herum mit einem Abstand beabstandet sind, der ein Mehrfaches des Abstands zwischen benachbarten Kerben des Zahnriemens ist.

3. Scheibenantriebssystem nach Anspruch 1 oder 2, wobei jeder Teilzahn (12) mindestens an einer Antriebsseite des Teilzahns eine geneigte Flanke hat.

4. Scheibenantriebssystem nach einem der Ansprüche 1 bis 3, wobei jeder Teilzahn (12) eine Höhe hat, die 30 bis 90 Prozent, vorzugsweise 60 bis 80 Prozent, der Tiefe von Kerben zwischen den Zähnen des Riemens (12) beträgt.

5. Scheibenantriebssystem nach einem der vorhergehenden Ansprüche, wobei ein Motor zum Antrieb des Scheibenantriebssystems vorgesehen ist und die Spannanordnung den Zahnriemen so spannt, dass zwischen dem Zahnriemen (5) und der angetriebenen Scheibe (4, 104) bei einem Antriebsmomentniveau, das niedriger als das Festbremsmoment des Motors ist, Schlupf erfolgt.

6. Scheibenantriebssystem nach einem der vorhergehenden Ansprüche, wobei die Spannanordnung (9) eine Spannvorrichtung (6) umfasst, die an einem Rahmen (2) montiert ist, der bezüglich eines Motors (3) festliegt, der das Antriebssystem antreibt.

7. Scheibenantriebssystem nach Anspruch 6, wobei die Spannvorrichtung (6) über eine lösbare Verbindung am Rahmen (2) montiert ist.

8. Scheibenantriebssystem nach Anspruch 6 oder 7, wobei die Spannvorrichtung (6) einen Arm (11) umfasst, der an einem Ende drehbar am Rahmen montiert ist und ein freies Ende hat, das mit einem Glied wie einem Lager (7) zur Ineingriffnahme des Zahnriemens (5) versehen ist.

9. Scheibenantriebssystem nach Anspruch 8, wobei der Arm (11) durch eine Feder (8), vorzugsweise eine Torsionsfeder, beaufschlagt wird, um den Riemen (5) mit Spannung zu beaufschlagen.

10. Elektrisch angetriebene Rasenpflegevorrichtung mit einem Scheibenantriebssystem nach einem der vorhergehenden Ansprüche.

## Revendications

1. Système d'entraînement par poulie, tel que pour un entraînement par moteur électrique, comprenant une courroie sans fin (5) entraînée autour d'un pignon d'entraînement (1) et d'une poulie entraînée (4, 104), et un agencement tendeur (9) agissant sur un tronçon de la courroie (5) entre le pignon d'entraînement (1) et la poulie entraînée (4, 104) pour augmenter la tension dans la courroie (5), la poulie entraînée (4, 104) étant agencée sans engagement par engrènement complet avec la section de la courroie en contact avec celle-ci, et **caractérisé en ce que** ladite courroie sans fin est une courroie dentée et l'agencement tendeur (9) est réglé pour tendre la courroie dentée (5) de sorte qu'un glissement se produira entre la courroie dentée (5) et la poulie entraînée (4, 104) lors du démarrage du système d'entraînement avant que le pignon d'entraînement (1) et la poulie entraînée (4, 104) n'atteignent des vitesses de rotation synchrones, et **en ce que** la poulie entraînée (4) a des dents partielles (12) qui s'engrènent avec la courroie dentée, et **en ce que** chaque dent partielle (12) a un profil supérieur formé en tant que courbe lisse.

2. Système d'entraînement par poulie selon la revendication 1, dans lequel les dents partielles (12) sont espacées autour de la poulie entraînée d'une distance plusieurs fois supérieure à la distance entres des crans adjacents de la courroie dentée.

3. Système d'entraînement par poulie selon la revendication 1 ou 2, dans lequel chaque dent partielle (12) a un flanc incliné, au moins sur un côté d'entraînement de la dent partielle.

4. Système d'entraînement par poulie selon l'une quelconque des revendications 1 à 3, dans lequel chaque dent partielle (12) a une hauteur qui représente de 30 à 90 pour cent, de préférence de 60 à 80 pour cent, de la profondeur des crans entre les dents de la courroie (12).

5. Système d'entraînement par poulie selon l'une quelconque des revendications précédentes, dans lequel un moteur est prévu pour entraîner le système d'entraînement par poulie, et l'agencement tendeur tend la courroie dentée de sorte qu'un glissement se produit entre la courroie dentée (5) et la poulie entraînée (4, 104) à un niveau de couple d'entraînement qui est inférieur au couple de calage du moteur.

6. Système d'entraînement par poulie selon l'une quelconque des revendications précédentes, dans lequel l'agencement tendeur (9) comprend un dispositif de tension (6) monté sur un cadre (2) fixe par rapport à un moteur (3) qui entraîne le système d'entraînement.

7. Système d'entraînement par poulie selon la revendication 6, dans lequel le dispositif de tension (6) est monté sur le cadre (2) par une liaison libérable.

8. Système d'entraînement par poulie selon la revendication 6 ou 7, dans lequel le dispositif de tension (6) comprend un bras (11) monté rotatif sur le cadre à une extrémité et ayant une extrémité libre munie d'un organe, tel qu'un palier (7), pour l'engagement avec la courroie dentée (5).

9. Système d'entraînement par poulie selon la revendication 8, dans lequel un ressort (8), de préférence un ressort de torsion, agit sur le bras (11) pour appliquer une tension à la courroie (5).

10. Dispositif d'entretien de pelouse alimenté électriquement, comprenant un système d'entraînement par poulie selon l'une quelconque des revendications précédentes.
